Europäisches Patentamt

European Patent Office

Office européen des brevets

(11) Publication number: **0 440 028 A2**

# EUROPEAN PATENT APPLICATION

(21) Application number: 91100251.7

(22) Date of filing: 09.01.91

(51) Int. Cl.⁵: **H04Q 1/45**

(30) Priority: 29.01.90 US 471500
13.08.90 US 567233

(43) Date of publication of application:
07.08.91 Bulletin 91/32

(84) Designated Contracting States:
DE FR GB

(71) Applicant: DIALOGIC CORPORATION
300 Littleton Road
Parsippanny, New Jersey 07054(US)

(72) Inventor: Hamilton, Chris
41 Harrison Avenue
Montclair, New Jersey 07042(US)

(74) Representative: Herrmann-Trentepohl,
Werner, Dipl.-Ing. et al
Herrmann-Trentepohl, Kirschner, Grosse,
Bockhorni & Partner Forstenrieder Allee 59
W-8000 München 71(DE)

(54) Multifrequency tone signal detector.

(57) An MF digit or DTMF digit detector identifies MF digits or DTMF digits in a signal and eliminates talkoff as a source of false detection by analyzing the frequency spectrum of the signal which is provided by FFT and by using the history of the signal to determine whether an MF digit or a DTMF digit was simulated by a human voice.

FIG. 1

## MULTIFREQUENCY TONE SIGNAL DETECTOR

This is a continuation-in-part of patent application Serial No. 07/471,500 filed January 29, 1990.

### Technical field of the Invention

The present invention pertains to the field of detecting and identifying telephone signals and, in particular, to method and apparatus for detecting and identifying multifrequency signals --including multifrequency tone (MF) signals and dual tone multifrequency signals (DTMF) signals--which occur in a telephone network such as the Public Switched Telephone Network (PSTN).

### Background of the Invention

It is well known to those of ordinary skill in the art that automated systems for use in telecommunications applications typically require a capability of detecting and identifying signals which are transmitted over a telephone network, such as, for example, the Public Switched Telephone Network (PSTN) in order to function properly. For example, it is well known that, under certain conditions, specific machine-generated, single-frequency signals, denoted as "call-progress" signals, are transmitted over a telephone network to indicate call status conditions. In addition to machine-generated, single-frequency signals, it is well known that automated systems for use in telecommunications voice processing applications often require the capability of detecting and identifying machine-generated, communication signals such as ringback, dial tone, multifrequency signals such as, for example, multifrequency tone (MF) signals and dual tone multifrequency (DTMF) signals, and so forth, as well as signals which are produced by human speech, noise and hum, and so forth. Further, it is well known that the automated system advantageously should have the capability to perform such detection and identification on analog signals as well as on digital signals.

An MF and DTMF detector is apparatus for detecting and identifying MF digits or DTMF digits in a digital or analog signal which is transmitted, for example, over the PSTN. As is well known to those of ordinary skill in the art, an MF digit or a DTMF digit typically is detected and identified by comparing the frequency characteristics of an input signal with the frequency characteristics of an MF digit or a DTMF digit, respectively. If the frequency characteristics of the input signal and an MF digit or DTMF digit, respectively, are close to each other, within a predetermined degree, the detector generates a detection and identification signal which indicates the identity of the detected MF digit or DTMF digit. In practice, one well known method for determining the frequency characteristics of a digital or analog signal is to perform a Fourier spectral analysis on a short time duration segment of the signal. Such a Fourier spectral analysis yields a set of numbers which represents the distribution of energy for the segment over the frequency spectrum. Since an MF digit comprises one of fifteen (15) possible pairs of predetermined MF fundamental tones and a DTMF digit comprises one of sixteen (16) possible pairs of predetermined DTMF fundamental tones, the frequency spectrum of the input signal may be compared with the frequency spectrum of fifteen (15) possible MF digits --fifteen (15) possible MF fundamental tone pairs-- or sixteen (16) possible DTMF digits --sixteen (16) possible DTMF fundamental tone pairs--, respectively. If the frequency spectrum of the input signal matches the frequency spectrum of one of the MF digits or DTMF digits, respectively, to a predetermined degree, the MF and DTMF detector generates a signal which indicates: (a) that an MT digit or a DTMF digit, respectively, had been detected in the input signal and (b) the identity of the detected MT digit or DTMF digit, respectively.

While the above describes a detector which is sufficient for detecting and identifying MF digits and DTMF digits in many applications, there is a commonly occurring class of events which can fool such a detector. For example, talkoff is a commonly occurring event which can cause false detection by such MT and DTMF detectors. Talkoff is an event wherein an MT digit or a DTMF digit is simulated by an input signal which is produced by a human voice. In particular, when a person speaks, the frequency spectrum of his or her voice will occasionally simulate the frequency spectrum of an MF digit or a DTMF digit and will, thereby, cause false detection by MF and DTMF detectors of the type described above.

As one can readily appreciate from the above, there is a need in the art for method and apparatus for detecting and identifying MF digits and DTMF digits in analog signals as well as in digital signals which eliminates talkoff as a source of false detection. In addition, there is a need for such a method and apparatus which can be easily customized for particular applications such as, for example, for low talkoff or for low signal-to-noise.

### Summary of the Invention

Embodiments of the present invention advantageously solve the above-identified need in the art by providing method and apparatus for detecting and identifying MF digits and DTMF digits in an input signal. If the input signal is an analog signal, in accordance with the present invention, samples are taken at a predetermined sampling rate and the samples are converted into a linear pulse code modulated (PCM) digital format. On the other hand, if the input signal is a digital signal, in accordance with the present invention, the digital signal values are transformed into a linear PCM digital format if the input signal is not already thusly encoded, i.e., if the input digital signal had been encoded using a u-law or an A-law PCM format, the digital signal values must be converted into a linear PCM format.

Next, in accordance with the present invention, a Fourier spectral analysis is performed on short time duration segments of the input signal, which short time duration segments are referred to as frames. In particular, a frame is comprised of a predetermined number of samples of an input analog signal or a predetermined number of values of an input digital signal, all in linear PCM format. Further, the Fourier spectral analysis of a frame is obtained by a Discrete Fourier Transform (DFT), which DFT provides the frequency spectrum of the frame. In particular, in preferred embodiments of the present invention, the DFT is a Fast Fourier Transform (FFT) which is performed by a Digital Signal Processor (DSP).

As an example of the above, in a preferred embodiment of the present invention for use in analyzing an analog signal which is transmitted over the PSTN and which has a 4000 Hz bandwidth, the analog signal is sampled, in accordance with the Nyquist criterion, at least 8000 times/sec and the predetermined number of samples or values per frame is chosen to be 256. Further, to increase temporal resolution, a frame of 256 samples or values which is Fourier analyzed by the FFT is comprised as follows. The "present" frame comprises the last 128 samples or values from the previous frame and the next or "new" 128 samples or values which have been obtained from the input signal. As a result, the "next" frame to be Fourier analyzed by the FFT after the "present" frame comprises the 128 "new" samples or values from the "present" frame and the next 128 samples or values obtained from the input signal. Then, prior to calculating the FFT, each sample or value $S_n$ - (where $n = 0, ..., 255$) is multiplied by a number $w_n$ which is given by $w_n = \sin(2\Pi n/512)$. This windowing function is well known to those of ordinary skill in the art and reduces anomalous spectral components due to the finite frame length of 256 samples.

Each frequency bin in the frequency spectrum has a bin index denoted by n. However, because the input signal is real, only the first 128 bins are of interest since the last 128 bins are identical to the first 128 bins. The real and imaginary coefficients determined by the FFT for each frequency bin in the frequency spectrum are squared and summed to provide a bin energy $e(n)$ for each frequency bin in the frequency spectrum and, in addition, the bin energies for each bin are summed to provide the total energy ETOT for the frame. Next, a predetermined number of energy maxima in the frequency spectrum of the frame are determined. An energy maximum is defined as the occurrence of a bin in the frequency spectrum of a frame which has more energy than its adjacent sidebins and, in accordance with a preferred embodiment of the present invention, the only energy maxima determined are the three largest in the spectrum. Next, the following tests are performed.

The first test determines whether the total energy of the frame, ETOT, falls below a predetermined threshold for MF and a predetermined threshold for DTMF, respectively. If the total energy falls below a particular predetermined threshold then the input signal cannot be that particular type of digit.

The second test compares the frequencies of the fundamental energy of the two largest maxima with the frequencies of each of the fifteen (15) possible MF digits --for MF-- or with the frequencies of each of the sixteen (16) possible DTMF digits --for DTMF. Each MF digit is comprised of a pair of MF fundamental signals --each of which MF fundamental signals has an energy substantially at a predetermined frequency-- and each DTMF digit is comprised of a pair of DTMF fundamental signals --each of which DTMF fundamental signals has an energy substantially at a predetermined frequency. In particular, for MF digits, there are six (6) MF fundamental signals and, for DTMF digits, there are eight (8) DTMF fundamental signals (four lowband signals and four highband signals), and a DTMF digit is comprised of one of the four possible DTMF fundamental lowband signals and one of the four possible DTMF highband signals. Thus, if an MF digit or a DTMF digit is present, most of the energy in the frame will reside in bins corresponding to the frequency of the MF fundamental signals of the MF digit or in bins corresponding to the frequency of the DTMF fundamental signals of the DTMF digit, respectively. As should be understood by those of ordinary skill in the art, because an MF fundamental signal or a DTMF fundamental signal is often not centered on a particular frequency bin in the frequency spectrum, some energy from an MF fundamental or a DTMF fundamental will be distributed to adjacent bins which are denoted as sidebins. In accordance with the present invention, the fundamental energy is defined as the sum of the energy in a peak of the frequency spectrum and the energy of the peak's largest sidebin. Of course, it should be clear to those of ordinary skill in the art that these two bins could have equal energy. If a match is found with two fundamental frequencies of an MF digit or a DTMF digit, respectively, we have a possible MF digit or DTMF digit, respectively. This test permits the frequencies of the two largest maxima to deviate from the MF fundamental frequencies or DTMF fundamental frequencies, respectively, to which they are closest by more than a predetermined amount. For example, according to well known, standard telephone transmission criteria, one can have a valid MF digit when there is a 5 Hz frequency deviation in the MF fundamental tones and one can have a valid DTMF digit where there is a 1.5 % frequency deviation in the DTMF fundamental tones. However, for a DTMF digit, a deviation of over 3.5 % is cause for rejection for DTMF digits.

The third test determines whether the total energy for this frame is less than the total energy for the previous frame and, if the total energy is decreasing, the MF digit or DTMF digit, respectively, is rejected. The MF digit or DTMF digit is rejected in accordance with the present invention because it has been determined that it is highly unlikely that the inception of an MF digit or a DTMF digit would have less energy than occurs in the previous frame.

The fourth test determines whether the ratio of the total energy to the non-MF energy or non-DTMF energy, respectively, in the frame is less than a predetermined constant BROADMF or BROADDTMF, respectively, and, if it is not, we still have a possible valid MF digit or DTMF digit, respectively. The non-MF energy or non-DTMF energy is determined to be equal to the difference between ETOT and the MF digit energy or the DTMF digit energy, respectively, where the MF digit energy or the DTMF digit energy equals the sum of the MF fundamentals or the DTMF fundamentals, respectively. Thus, if the ratio of the total energy to non-MF energy is too small, we do not have a valid MF digit or if the ratio of the total energy to non-DTMF energy is too small, we do not have a valid DTMF digit.

The fifth test determines the signal-to-noise ratio for this frame. The ratio of the MF digit energy or the DTMF digit energy and the energy of the third maximum is compared with SNRMF or SNRDTMF, respectively, where SNRMF and SNRDTMF are predetermined constants. If the ratio of the MF digit energy or the DTMF digit energy to the energy of the third maximum, i.e., the signal-to-noise ratio, is greater than SNRMF or SNRDTMF, respectively, then we still have a possible valid MF digit or DTMF digit, respectively.

The sixth test involves twist, i.e., the ratio of the fundamental energy of the larger energy MF fundamental of the MF digit to the fundamental energy of the smaller energy MF fundamental --the fundamental energy is the sum of the maximum energy and the energy of the largest sidebin-- or the ratio of the fundamental energy of the larger energy DTMF fundamental of the DTMF digit to the fundamental energy of the smaller energy DTMF fundamental. If the MF ratio is less than TWISTMF or the DTMF ratio is less than TWISTDTMF, where TWISTMF and TWISTDTMF are predetermined constants, we still have a possible valid MF digit or DTMF digit, respectively.

The seventh test determines talkoff. In order to do so, the following quantities are determined. ED and ES are the difference and sum, respectively, of ETOT for the present frame and for the second previous frame, respectively. If the ratio of ES to ED is larger than EDEVMF or EDEVDTMF, respectively, where EDEVMF and EDEVDTMF are predetermined constants, then a decision is made that a human voice simulated an MF digit or a DTMF digit, respectively, i.e., talkoff has occurred. It is important to note that embodiments of the present invention provide excellent determination of talkoff because the embodiments take into account the history of the input signal.

Brief Description of the Drawing

A complete understanding of the present invention may be gained by considering the following detailed description in conjunction with the accompanying drawing, in which:

FIG. 1 shows, in pictorial form, a block diagram of a preferred embodiment of the inventive apparatus for detecting and identifying MF digits or DTMF digits in telephone signals; and

FIG. 2 shows a flow chart of a microprocessor program which forms part of the preferred embodiment of the inventive apparatus shown in FIG. 1.

To facilitate understanding, identical reference numerals have been used to denote identical elements common to the figures.

Detailed Description

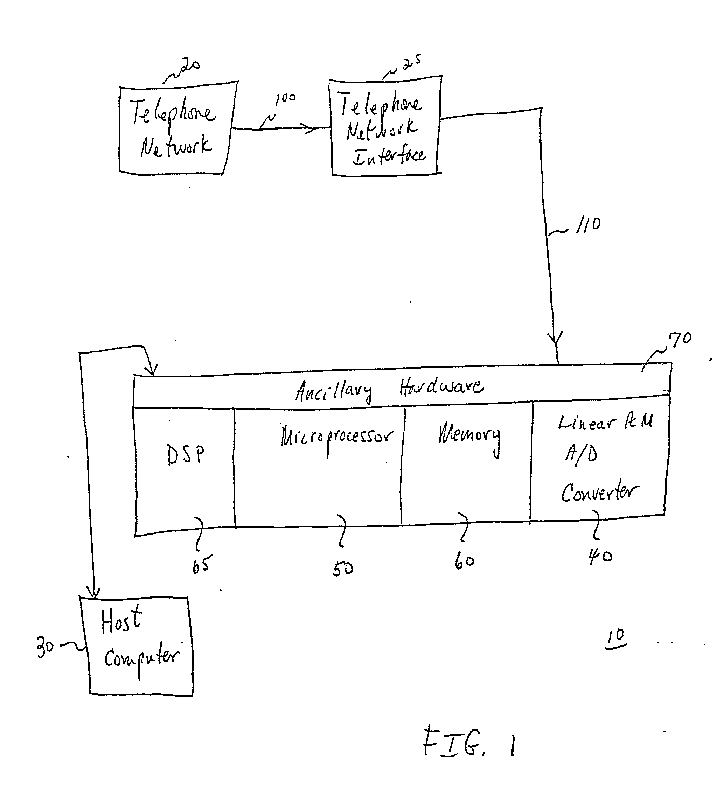

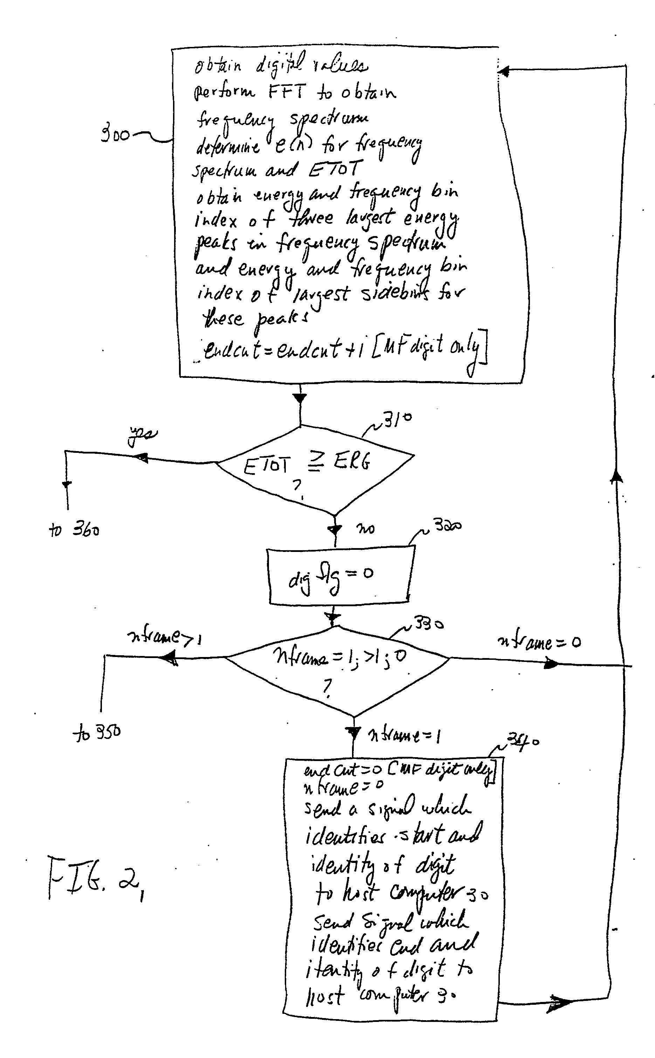

FIG. 1 shows a block diagram of a preferred embodiment of inventive apparatus DM 10 and the manner in which it is used for detecting and identifying MF and DTMF digits in telephone signals. As shown in FIG. 1, analog telephone signal 100 from telephone network 20 is transmitted by telephone network interface 25 to DM 10 as signal 110. Many apparatus for use as telephone interface 25 are well known to those of ordinary skill in the art. For example, one such apparatus comprises a portion of a DIALOG/41 Digitized Voice and Telephony Computer Interface circuit which is available from Dialogic Corporation, 300 Littleton Road, Parsippany, New Jersey 07054. In pertinent part, this circuit comprises well known means for interfacing with the telephone network to send and receive calls; means, such as transformers, to electrically isolate subsequent circuits; and filter circuits.

Signal 110 which is output from telephone network interface 25 is applied as input to DM 10 and, in particular, to ancillary hardware 70. Specifically, signal 110 is applied to a sample and hold circuit (not shown) in ancillary hardware 70, which sample and hold circuits are well known to those of ordinary skill in the art.

The output from the sample and hold circuit contained in ancillary hardware 70 is applied to linear PCM analog-to-digital converter 40. There are many circuits which are well known to those of ordinary skill in the art that can be used as linear PCM analog-to-digital converter 40. The encoded signal output from analog-to-digital converter 40 is placed, sample by sample, into a tri-state buffer (not shown) for subsequent transmittal to a data bus (not shown). A tri-state buffer for performing this function is well known to those of ordinary skill in the art. For example, the tri-state buffer may be a TI 74LS244 tri-state buffer which is available from Texas Instruments of Dallas, Texas, or any other such equipment.

DM 10 further comprises microprocessor 50, memory 60, Digital Signal Processor (DSP) 65, and a portion of ancillary hardware 70 for use in interfacing with a host computer 30. DSP 65 may be any one of a number of digital signal processors which are well known to those of ordinary skill in the art such as, for example, a Motorola 56000 processor and microprocessor 50 may be any one of a number of microprocessors which are well known to those of ordinary skill in the art such as an INTEL 286 microprocessor which is available from INTEL of Santa Clara, California, or any other such equipment. Memory 60 may be any one of a number of memory equipments which are well known to those of ordinary skill in the art such as an HITACHI 6264 RAM memory which is available from HITACHI America Ltd. of San Jose, California, or any other such equipment. The portion of ancillary hardware 70 which interfaces with host computer 30 may be readily fabricated by those of ordinary skill in the art by using circuits which are also well known to those of ordinary skill in the art. For example, the portion of ancillary hardware 70 which interfaces with host computer 30 may be comprised of TI 74LS245 data bus transceivers, TI 74LS244 address buffers, and TI PAL 16L8 control logic, all of which is available from Texas Instruments of Dallas, Texas, or any other such equipment. Finally, as shown in FIG. 1, DM 10 interfaces with host computer 30, which may be any one of a number of computers which are well known to those of ordinary skill in the art such as, for example, an IBM PC/XT/AT, or any other such equipment.

The encoded digital samples output from linear PCM analog-to-digital encoder 40 are placed in the buffer (not shown) and are output, in turn, therefrom to the data bus (not shown). Then, the digital samples are received from the data bus, digital sample by digital sample, by microprocessor 50. Microprocessor 50, in accordance with the present invention and as will be described in detail below, places a predetermined number of digital samples on the data bus for receipt and analysis by DSP 65. The output from DSP 65 is placed on the data bus for transmittance to microprocessor 50. Then, as will be described in detail below, microprocessor 50, in conjunction with a program and data stored in memory 60, analyzes the DSP output to detect and identify an MF digit or a DTMF digit in the input signal and, in response thereto, to generate and transmit a signal to host computer 30. As is well known to those of ordinary skill in the art, host computer may be a part of an interactive system whose operation entails receiving information from a human by means of DTMF digits. As such, the interactive system of which host computer 30 is a part utilizes the signal provided by DM 10 to generate further signals to obtain further information from the human or it performs operations and then transmits further information to the human. Such systems are well known in the art and, for simplicity, their detailed operation need not be set forth here.

As stated above, apparatus DM 10 detects and identifies MF digits or DTMF digits in telephone signal 100. In so doing, DM 10 determines the energy content of predetermined portions of the frequency spectrum of incoming telephone signal 100. In addition, if input telephone signal 100 is not an analog signal, as is the case for the embodiment shown in FIG. 1, but is instead a digital signal, embodiments of the present invention convert the digital values of the input signal into a linear PCM digital format. For example, if the input digital signal values had been encoded using u-law or A-law PCM, they are converted into a linear PCM format. This conversion is performed in accordance with methods and apparatus which are well known to those of ordinary skill in the art such as, for example, by using a lookup table stored in memory 60. Nevertheless, in describing the inventive method and apparatus, for ease of understanding, we will refer to the linear PCM digital format samples which are output from analog-to-digital encoder 40 as digital samples.

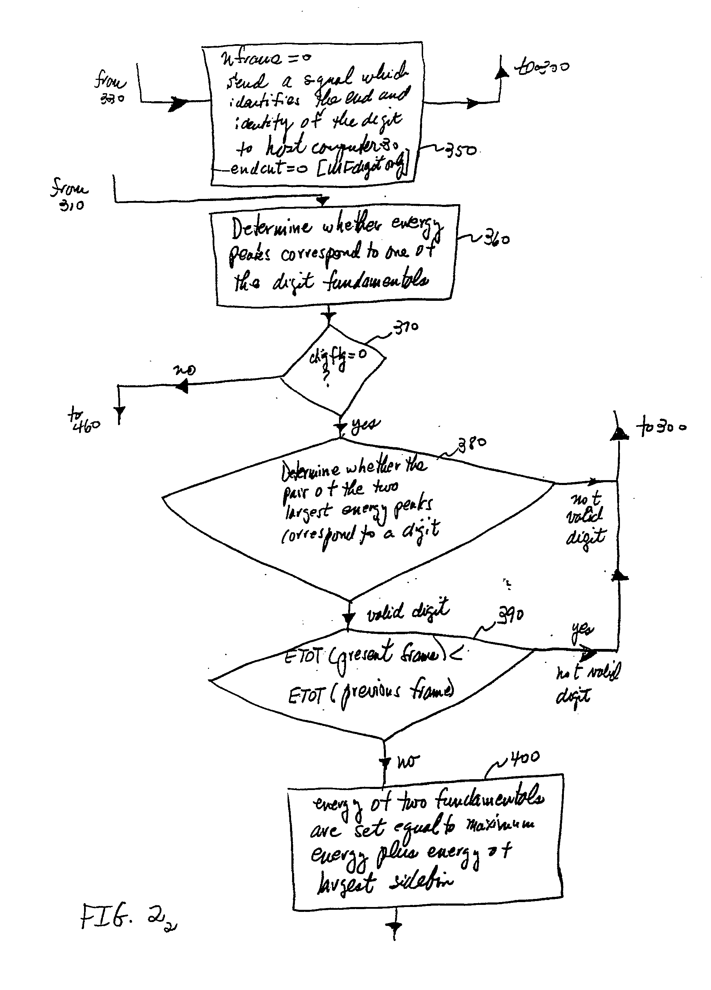

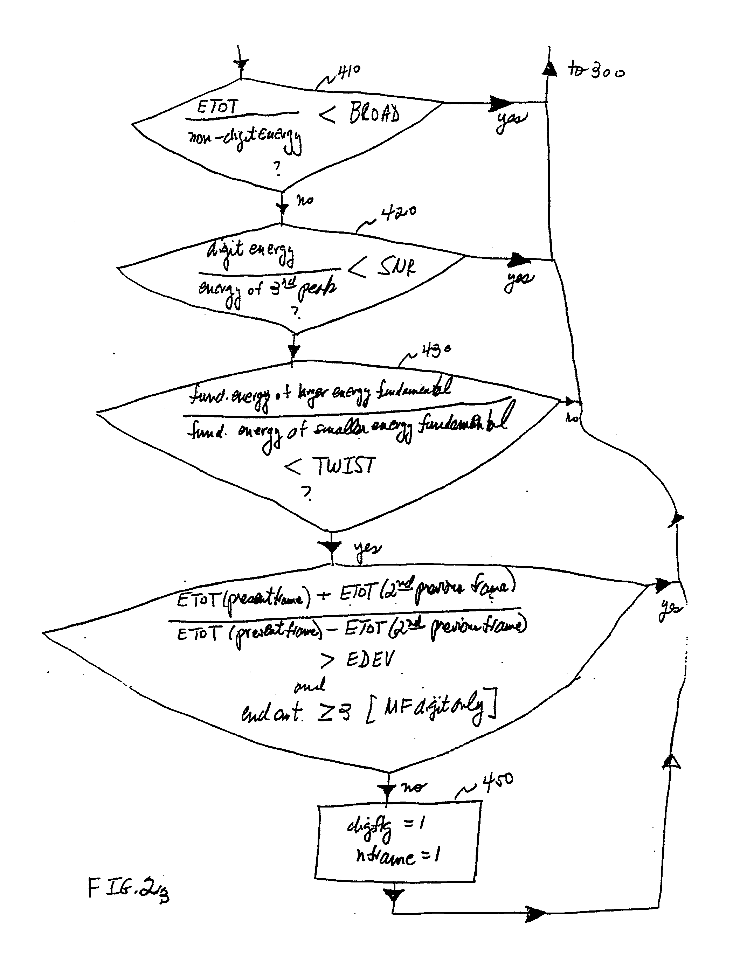

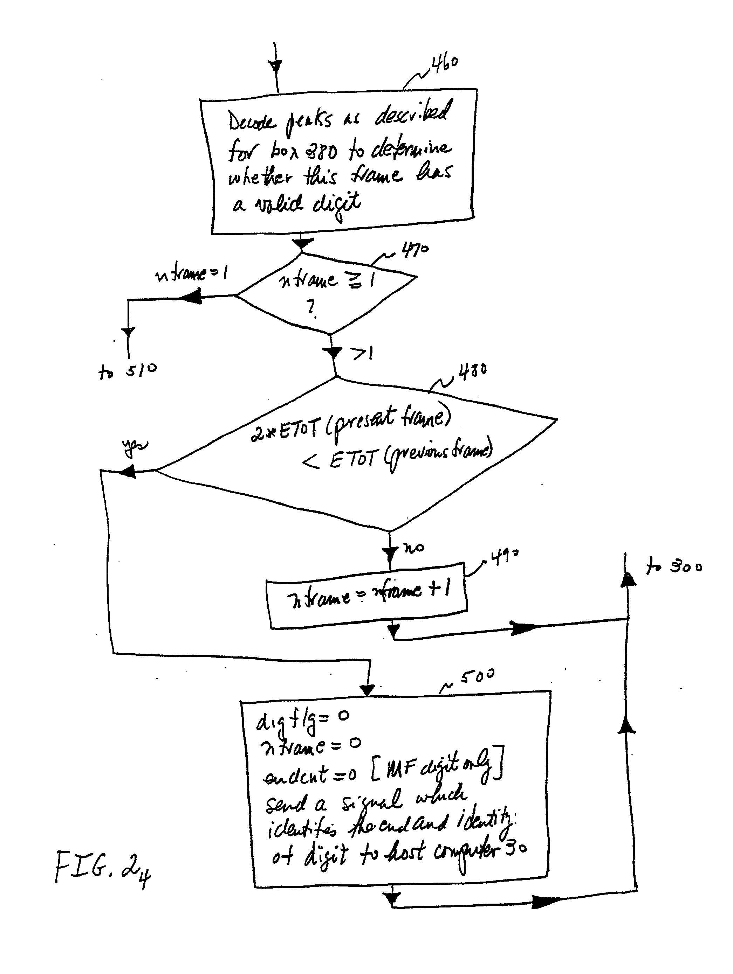

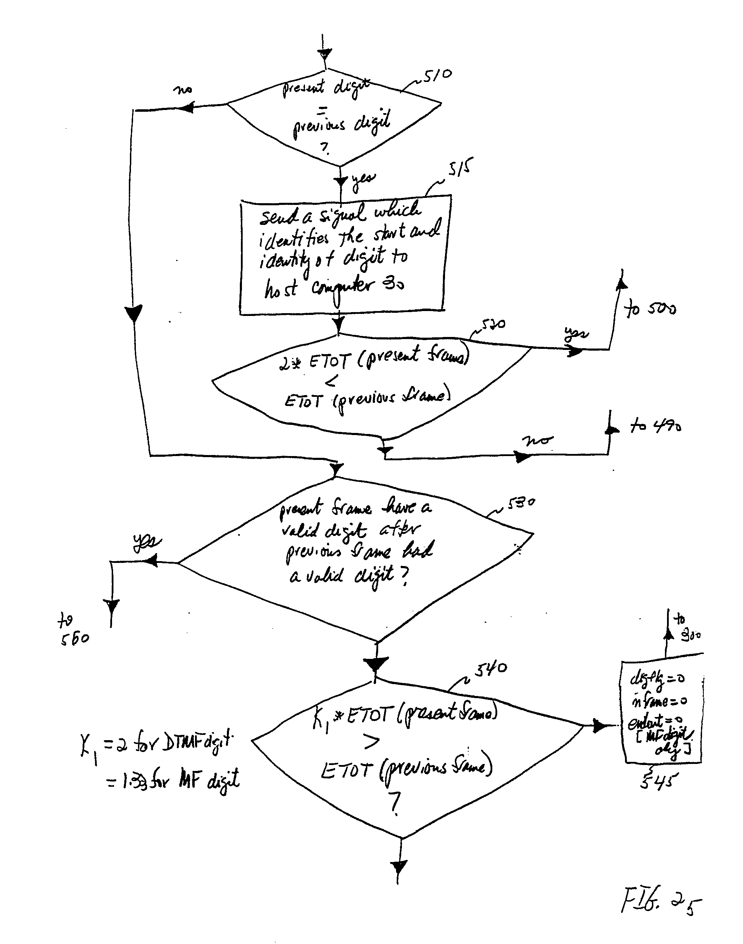

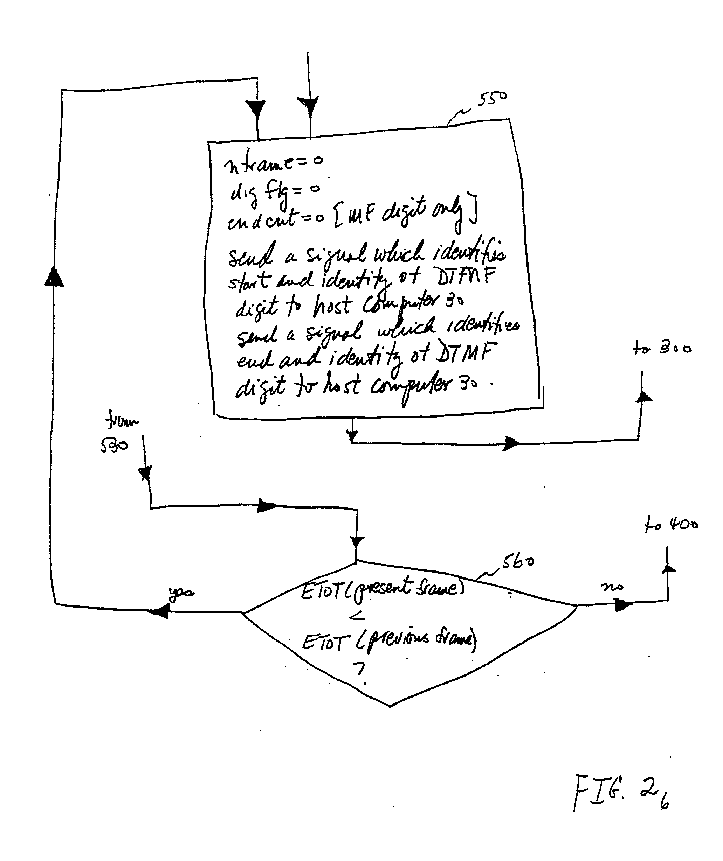

The digital samples are input into DSP 65 where a Fast Fourier Transform (FFT) is performed to produce the frequency spectrum of input signal 100. Then, microprocessor 50 analyzes the frequency spectrum output from DSP 65 to detect and identify MF digits or DTMF digits under the direction of a software program which performs in accordance with the flow chart shown in FIG. 2.

Before discussing how DM 10 detects and identifies MF digits or DTMF digits in accordance with preferred embodiments of the present invention, we will first describe how DM 10 operates in general to detect and identify MF digits or DTMF digits.

In accordance with the present invention, a Fourier spectral analysis is performed on short time duration segments of the input signal, which short time duration segments are referred to as frames. In particular, a frame is comprised of a predetermined number of samples of an input analog signal or a predetermined number of values of a input digital signal, all in linear PCM format. Further, the Fourier spectral analysis of a frame is obtained by a Discrete Fourier Transform (OFT), which OFT provides the frequency spectrum of the frame. In particular, in preferred embodiments of the present invention, the DFT is a Fast Fourier Transform (FFT) which is performed by DSP 65.

In the preferred embodiment of the present invention shown in FIG. 1 for use in analyzing analog signal 100 which is transmitted over the PSTN and which has a 4000 Hz bandwidth, analog signal 100 is sampled, in accordance with the Nyquist criterion, at least 8000 times/sec and the predetermined number of samples or values per frame is chosen to be 256. Further, in order to increase temporal resolution, a frame of 256 values which is input to DSP 65 for Fourier analysis is comprised as follows. The "present" frame comprises the last 128 values from the previous frame and the next or "new" 128 values which have been obtained from input signal 100. As a result, the "next" frame to be Fourier analyzed by the FFT after the "present" frame comprises the 128 "new" values from the "present" frame and the next 128 values obtained from input signal 100. Then, prior to calculating the FFT, each sample or value $S_n$ - (where $n = 0, ..., 255$) is multiplied by a number $w_n$ which is given by $w_n = \sin(2\Pi n/512)$. This windowing function is well known to those of ordinary skill in the art and reduces anomalous spectral components due to the finite frame length of 256 samples.

As a result of the above, when DSP 65 of FIG. 1 is embodied in a Motorola 56000 DSP and 256 samples are used to perform a Fast Fourier Transform (FFT), a 128 bin frequency spectrum for the input signal is produced wherein the frequency bins are 31.25 Hz wide. Each frequency bin in the frequency spectrum has a bin index denoted by n. However, because the signal is real, only the first 128 bins are of interest since the last 128 bins are identical to the first 128 bins. The real and imaginary coefficients determined by the FFT for each frequency bin are squared and summed to provide a bin energy e(n) for each frequency bin in the frequency spectrum and, in addition, the energies for each bin are summed to provide the total energy ETOT for the frame.

Next, a predetermined number of energy maxima in the frequency spectrum of the frame are determined. An energy maximum is defined as the occurrence of a bin in the frequency spectrum of a frame which has more energy than its adjacent sidebins and, in accordance with a preferred embodiment of the present invention, the only energy maxima determined are the three largest in the spectrum. Next, the following tests are performed.

The first test determines whether the total energy of the frame, ETOT, falls below a predetermined threshold for MF and a predetermined threshold for DTMF, respectively. If the total energy falls below a particular predetermined threshold then the input signal cannot be that particular type of digit.

The second test compares the frequencies of the fundamental energy of the two largest maxima with the frequencies of each of the fifteen (15) possible MF digits for MF digit detection or with the frequencies of each of the sixteen (16) possible DTMF digits for DTMF digit detection. Each MF digit is comprised of a pair of MF fundamental signals --each of which MF fundamental signals has an energy substantially at a predetermined frequency-- and each DTMF digit is comprised of a pair of DTMF fundamental signals --each of which DTMF fundamental signals has an energy substantially at a predetermined frequency. In particular, for MF digits, there are six (6) MF fundamental signals and, for DTMF digits, there are eight (8) DTMF fundamental signals (four lowband signals and four highband signals), and a DTMF digit is comprised of one of the four possible DTMF fundamental lowband signals and one of the four possible DTMF highband signals. Thus, if an MF digit or a DTMF digit is present, most of the energy in the frame will reside in bins corresponding to the frequency of the MF fundamental signals of the MF digit or in bins corresponding to the frequency of the DTMF fundamental signals of the DTMF digit, respectively. As should be understood by those of ordinary skill in the art, because an MF fundamental signal or a DTMF fundamental signal is often not centered on a particular frequency bin in the frequency spectrum, some energy from an MF fundamental or a DTMF fundamental will be distributed to adjacent bins which are denoted as sidebins. In accordance with the present invention, the fundamental energy is defined as the sum of the energy in a peak of the frequency spectrum and the energy of peak's largest sidebin. Of course, it should be clear to those of ordinary skill in the art that these two bins could have equal energy. If a match is found with two fundamental frequencies of an MF digit or DTMF digit, respectively, we have a possible MF digit or DTMF digit, respectively. This test permits the frequencies of the two largest maxima to deviate from the MF fundamental frequencies or DTMF fundamental frequencies, respectively, to which they are closest by more than a predetermined amount. For example, according to well known, standard telephone transmission criteria, one can have a valid MF digit when there is a 5 Hz frequency deviation in the MF fundamental tones and one can have a valid DTMF digit where there is a 1.5 % frequency deviation in the DTMF fundamental tones. However, for a DTMF digit, a deviation of over 3.5 % is cause for rejection.

The third test determines whether the total energy for this frame is less than the total energy for the previous frame and, if the total energy is decreasing, the MF digit or DTMF digit, respectively, is rejected. The MF digit or DTMF digit is rejected in accordance with the present invention because it has been determined that it is highly unlikely that the inception of an MF digit or a DTMF digit would have less energy than occurs in the previous frame.

The fourth test determines whether the ratio of the total energy to the non-MF energy or non-DTMF energy, respectively, in the frame is less than a predetermined constant BROADMF or BROADDTMF, respectively, and, if it is not, we still have a possible valid MF digit or DTMF digit, respectively. The non-MF energy or non-DTMF energy is determined to be equal to the difference between ETOT and the MF digit energy or the DTMF digit energy, respectively, where the MF digit energy or the DTMF digit energy equals the sum of the MF fundamentals or the DTMF fundamentals, respectively. Thus, if the ratio of the total energy to non-MF energy is too small, we do not have a valid MF digit or if the ratio of the total energy to non-DTMF energy is too small, we do not have a valid DTMF digit.

The fifth test determines the signal-to-noise ratio for this frame. The ratio of the MF digit energy or the DTMF digit energy and the energy of the third maximum is compared with SNRMF or SNRDTMF, respectively, where SNRMF and SNRDTMF are predetermined constants. If the ratio of the MF digit energy or the DTMF digit energy to the energy of the third maximum, i.e., the signal-to-noise ratio, is greater than SNRMF or SNRDTMF, respectively, then we still have a possible valid MF digit or DTMF digit, respectively.

The sixth test involves twist, i.e., the ratio of the fundamental energy of the larger energy MF fundamental of the MF digit to the fundamental energy of the smaller energy MF fundamental --the fundamental energy is the sum of the maximum energy and the energy of the largest sidebin-- or the ratio of the fundamental energy of the larger energy DTMF fundamental of the DTMF digit to the fundamental energy of the smaller energy DTMF fundamental. If the MF ratio is less than TWISTMF or the DTMF ratio is less than TWISTDTMF, where TWISTMF and TWISTDTMF are predetermined constants, we still have a possible valid MF digit or DTMF digit, respectively.

The seventh test determines talkoff. In order to do so, the following quantities are determined. ED and ES are the difference and sum, respectively, of ETOT for the present frame and for the second previous frame, respectively. If the ratio of ES to ED is larger than EDEVMF or EDEVDTMF, respectively, where EDEVMF and EDEVDTMF are predetermined constants, then a decision is made that a human voice simulated an MF digit or a DTMF digit, respectively, i.e., talkoff has occurred. It is important to note that embodiments of the present invention provide excellent determination of talkoff because the embodiments take into account the history of the input signal.

If at least two frames having a "valid" MF digit or "valid" DTMF digit have been detected, a determination that the the MF digit or DTMF digit, respectively, has ended is made only if there is a drop in energy in a frame by more than one-half as compared with the previous frame. Lastly, if only one frame of a valid digit has been detected, i.e., the "first" frame, a determination that the MF digit or DTMF digit has ended is made: (a) when the next frame still has a "valid" MF digit or a "valid" DTMF digit, respectively, if there is a drop in energy in the next frame by more than one-half as compared with the "first" frame or (b) when the next frame has a different "valid" MF digit or DTMF digit or no "valid" MF digit or DTMF digit, if there is any energy drop.

With the general description set forth above in mind, we will now describe the preferred embodiment of the present invention in connection with FIG. 2. FIG. 2 shows a flow chart of a microprocessor program which forms part of the preferred embodiment of the inventive apparatus shown in FIG. 1 for detecting MF digits or DTMF digits. The following description will cover the detection of DTMF digits and will point out where the procedure is changed for the detection of MT digits. When MF digit or DTMF digit detector DM 10 analyzes analog telephone signal 100, samples of the amplitude of signal 100 are obtained in time sequence. Each sample is converted to a linear PCM digital format by means, for example, of a comparison with data stored in lookup tables in memory 60 or in a companion ROM (not shown) and the linear sample data is stored in memory 60. Samples are accumulated and loaded, 256 samples at a time in the preferred embodiment, into DSP 65. DSP 65 multiplies each sample $S_n$ by $sin(2\|n/512)$ where, in the preferred embodiment, the values of the half sine function have been previously stored in memory. Next, DSP 65 performs a 256 point Fast Fourier Transform (FFT) on this data.

Next, the real and imaginary coefficients for each frequency bin are squared and summed to provide an energy for each frequency bin. In the following, frequency bin indices are denoted by n and the energy for each such frequency bin is denoted by $e(n)$. However, because the signal is real, only the first 128 bins are of interest.

Next, a predetermined number of energy maxima in the frequency spectrum of the frame are determined. An energy maximum is defined as the occurrence of a bin in the frequency spectrum of a frame which has more energy than its adjacent sidebins. Further, in accordance with a preferred embodiment of the present invention, the energy maxima determined are the three largest. Next, the energy in each bin in the frequency spectrum of the frame is summed to provide the the total energy of the frame ETOT.

Because of possibly imperfect duplexing in telephone network interface 25, $e(n)$ in the frequency spectrum of input signal 100 which correspond to frequencies below 600 Hz are all set to zero.

Referring now to FIG. 2, box 300 is the point in the program wherein: (a) 128 digital values are obtained from input signal 100 --as described above if signal 100 is already in digital form a transformation into linear PCM digital format is performed if necessary; (b) a Discrete Fourier Transform is performed on the previous 128 values obtained and the present 128 values obtained --in this embodiment an FFT is performed by DSP 65-- to provide the frequency spectrum of this group of values which is referred to as a frame; (c) the energy of each bin in the frequency spectrum of the frame is determined as the sum of the square of the real and imaginary frequency component for each bin; (d) the total energy of the frame, ETOT, is determined as the sum of the energy of all the frequency bins; and (e) the energy and frequency bin index of the three largest energy peaks in the frequency spectrum of the frame are determined, along with the energy and frequency bin index of the largest energy sidebins for the three largest energy peaks. [For MF digit detection only, parameter endcnt is incremented by 1.] Then, the program in microprocessor 50 transfers control to decision box 310.

Decision box 310 is the point in the program at which microprocessor 50 examines the total energy ETOT in the present frame to determine whether the total energy is above or below a predetermined threshold, ERG. [ERG = ERGMF or ERGDTMF for MF or DTMF digit detection, respectively.] If the total energy is below the predetermined threshold, the program in microprocessor 50 transfers control to box 320. However, if the total energy is equal to or above the predetermined energy level, the program transfers control to box 360.

Box 320 is the point in the program at which microprocessor 50 initializes flag digflg by setting it to 0. Flag digflg indicates whether input signal 100 is in the middle of a verified or suspected MF or DTMF digit, respectively. Specifically, when digflg = 0, microprocessor 50 is awaiting the first frame which is suspected of being produced by an MF or a DTMF digit, respectively. Then, the program in microprocessor 50 transfers control to decision box 330.

Decision box 330 is the point in the program at which microprocessor 50 determines whether nframe is equal to 0 or 1 or if nframe is greater than 1. Flag nframe indicates the number of consecutive frames in which an MF digit or a DTMF digit, respectively, is found. If nframe = 1, the program transfers control to box 340; if nframe = 0, the program transfers control to box 300; and, if nframe is > 1, the program transfers control to box 350.

Box 340 is the point in the program at which microprocessor 50 has determined that the previous frame was suspected of having an MF digit or a DTMF digit present, respectively, and that the MF digit or DTMF digit, respectively, has ended in this frame. Then, DM 10: (a) sends a signal which identifies the MF digit or the DTMF digit, respectively, to host computer 30 and (b) sends a signal that the MF digit or DTMF digit, respectively, has ended to host computer 30. Finally, the program sets nframe = 0 and, if detecting an MF digit, it sets endcnt = 0. Then, the program transfers control to box 300.

Box 350 is the point in the program at which microprocessor 50 has determined that the MF digit or DTMF digit, respectively, which had been detected and identified previously has ended in this frame. Then, DM 10 sends a signal that the MF digit or DTMF digit, respectively, has ended to host computer 30. Finally, the program sets nframe = 0 and, if detecting an MF digit, it sets endcnt = 0. Then, the program transfers control to box 300.

Box 360 is the point in the program at which microprocessor 50 goes through the three largest energy peaks and determines whether they correspond to one of the six (6) MF fundamentals or to one of the eight (8) DTMF fundamentals, respectively. The number of the MF fundamental (1-6) or DTMF fundamental (1-8), respectively, and the frequency bin index of the peak corresponding thereto is stored in order of increasing frequency. In practice one must permit the frequency of the input tones to deviate by predetermined amounts from each of the MF fundamentals or DTMF fundamentals, respectively. In order to determine the acceptable bounds for each fundamental, one takes the frequency of each fundamental and adds and subtracts a predetermined amount to provide frequencies of the upper and lower bounds, respectively, for each fundamental. Then, the FFT for the upper and lower frequency bounds are performed to provide the maximum energy bin, largest sidebin, and the ratio of maximum energy to largest sidebin energy for the upper and lower bounds for each fundamental. These values are used to compare with the input maxima to determine whether a peak falls within the bounds of one of the MF fundamentals or DTMF fundamentals, respectively.

In particular, in the preferred embodiment, the determination entails the following tests for MF digits.

There is a match for MT fundamental 1 if:

    a) the frequency bin index of the maximum energy = 22 and the frequency bin index of the largest sidebin is 23

    or

    the frequency bin index of the largest sidebin = 21 and energy of maximum bin > $d_{11}$*(energy of sidebin 21)

    b) the frequency bin index of the maximum energy = 23 and the frequency bin index of the largest sidebin = 22 and energy of maximum bin < $d_{12}$*(energy of sidebin 22)

There is a match for MT fundamental 2 if:

    a) the frequency bin index of the maximum energy = 28 and energy of maximum bin < $d_{21}$*(energy of sidebin 29)

    b) the frequency bin index of the maximum energy = 29 and the frequency bin index of the largest sidebin = 28

    or

    the frequency bin index of the largest sidebin = 30 and energy of maximum bin > $d_{22}$*(energy of sidebin 30)

There is a match for MT fundamental 3 if:

    a) the frequency bin index of the maximum energy = 34 and the frequency bin index of the largest sidebin = 35 and energy of maximum bin > $d_{31}$*(energy of sidebin 35)

    b) the frequency bin index of the maximum energy = 35

    c) the frequency bin index of the maximum energy = 36 and the frequency bin index of the largest sidebin = 35 and energy of maximum bin < $d_{32}$*(energy of sidebin 35)

There is a match for MF fundamental 4 if:

    a) the frequency bin index of the maximum energy = 41 and the frequency bin index of the largest sidebin = 42

    or

    the frequency bin index of the largest sidebin = 40 and energy of maximum bin > $d_{41}$*(energy of sidebin 40)

    b) the frequency bin index of the maximum energy = 42

    c) the frequency bin index of the maximum energy = 43 and the frequency bin index of the largest sidebin = 42 and energy of maximum bin < $d_{42}$*(energy of sidebin 42)

There is a match for MF fundamental 5 if:

    a) the frequency bin index of the maximum energy = 47 and the frequency bin index of the largest sidebin = 48 and energy of maximum bin < $d_{51}$*(energy of sidebin 48)

    b) the frequency bin index of the maximum energy = 48

    c) the frequency bin index of the maximum energy = 49 and the frequency bin index of the largest sidebin = 48 and energy of maximum bin > $d_{52}$*(energy of sidebin 48)

There is a match for MF fundamental 6 if:

    a) the frequency bin index of the maximum energy = 53 and the frequency bin index of the largest sidebin = 54 and energy of maximum bin < $d_{61}$*(energy of sidebin 54)

    b) the frequency bin index of the maximum energy = 54

    c) the frequency bin index of the maximum energy = 55 and the frequency bin index of the largest sidebin = 54

    or

    the frequency bin index of the largest sidebin = 56 and energy of maximum bin > $d_{62}$*(energy of sidebin 56) $d_{11}$, $d_{12}$; $d_{21}$, $d_{22}$; $d_{31}$, $d_{32}$; $d_{41}$, $d_{42}$; $d_{51}$, $d_{52}$; and

$d_{61}$, $d_{62}$ are predetermined constants which are stored in memory 60. In other embodiments of the present invention, these constants may be downloaded into memory 60 from, for example, host computer 30.

In particular, in the preferred embodiment, the determination entails the following tests for DTMF digits.

There is a match for DTMF fundamental 1 if:

    a) the frequency bin index of the maximum energy = 22 and the frequency bin index of the largest sidebin is 23

    or

    the frequency bin index of the largest sidebin = 21 and energy of maximum bin $>c_{11}$*(energy of sidebin 21)

b) the frequency bin index of the maximum energy = 23 and the frequency bin index of the largest sidebin = 22 and energy of maximum bin $<c_{12}$*(energy of sidebin 22)

There is a match for DTMF fundamental 2 if:

a) the frequency bin index of the maximum energy = 24 and the frequency bin index of the largest sidebin = 25 and energy of maximum bin $<c_{21}$*(energy of sidebin 25)

b) the frequency bin index of the maximum energy = 25 and the frequency bin index of the largest sidebin = 24

or

the frequency bin index of the largest sidebin = 26 and energy of maximum bin $>c_{22}$*(energy of sidebin 26)

There is a match for DTMF fundamental 3 if:

a) the frequency bin index of the maximum energy = 27 and the frequency bin index of the largest sidebin = 28

or

the frequency bin index of the largest sidebin = 26 and energy of maximum bin $>c_{31}$*(energy of sidebin 26)

b) the frequency bin index of the maximum energy = 28 and the frequency bin index of the largest sidebin = 27 and energy of maximum bin $<c_{32}$*(energy of sidebin 27)

There is a match for DTMF fundamental 4 if:

a) the frequency bin index of the maximum energy = 30 and the frequency bin index of the largest sidebin = 31

or

the frequency bin index of the largest sidebin = 29 and energy of maximum bin $>c_{41}$*(energy of sidebin 30)

b) the frequency bin index of the maximum energy = 31 and the frequency bin index of the largest sidebin = 30 and energy of maximum bin $<c_{42}$*(energy of sidebin 30)

There is a match for DTMF fundamental 5 if:

a) the frequency bin index of the maximum energy = 38 and the frequency bin index of the largest sidebin = 39 and energy of maximum bin $<c_{51}$*(energy of sidebin 39)

b) the frequency bin index of the maximum energy = 39 and the frequency bin index of the largest sidebin = 38 the frequency bin index of the largest sidebin = 40 and energy of maximum bin $>c_{52}$*(energy of sidebin 40)

There is a match for DTMF fundamental 6 if:

a) the frequency bin index of the maximum energy = 42 and the frequency bin index of the largest sidebin = 43 and energy of maximum bin $<c_{61}$*(energy of sidebin 43)

b) the frequency bin index of the maximum energy = 43 and the frequency bin index of the largest sidebin = 42

or

the frequency bin index of the largest sidebin = 44 and energy of maximum bin $>c_{62}$*(energy of sidebin 44)

There is a match for DTMF fundamental 7 if:

a) the frequency bin index of the maximum energy = 47 and the frequency bin index of the largest sidebin = 48

or

the frequency bin index of the largest sidebin = 46 and energy of maximum bin $>c_{71}$*(energy of sidebin 46)

b) the frequency bin index of the maximum energy = 48 and the frequency bin index of the largest sidebin = 47 and energy of maximum bin $<c_{72}$*(energy of sidebin 47)

There is a match for DTMF fundamental 8 if:

a) the frequency bin index of the maximum energy = 51 and the frequency bin index of the largest sidebin = 52 and energy of maximum bin $<c_{81}$*(energy of sidebin 52)

b) the frequency bin index of the maximum energy = 52

c) the frequency bin index of the maximum energy = 53 and the frequency bin index of the largest sidebin = 52

or

the frequency bin index of the largest sidebin = 54 and energy of maximum bin $>c_{82}$*(energy of sidebin 54). $c_{11}, c_{12}; c_{21}, c_{22}; c_{31}, c_{32}; c_{41}, c_{42}; c_{51}, c_{52}; c_{61}, c_{62}; c_{71}, c_{72};$ and $c_{81}, c_{82};$ are predetermined constants which are stored in memory 60. In other embodiments of the present invention, these constants may be downloaded into memory 60 from, for example, host computer 30. Then, the program transfers control to decision box 370.

Decision box 370 is the point in the program at which microprocessor 50 tests to see if digflg = 0. If digflg = 0, the program is searching for the first frame which is suspected of containing an MF digit or a DTMF digit, respectively, and, as a result, the program transfers control to the portion of the program which corresponds to decision box 380. If digflg = 1, an MF digit or a DTMF digit, respectively, is suspected or is verified as having been detected and, as a result, control is transferred to the portion of the program which corresponds to box 460.

Decision box 380 is the point in the program at which microprocessor 50 decodes the maxima to determine whether the pair of the two largest maxima corresponds to a valid MF digit or DTMF digit, respectively. For example, for MF digits: if the first maximum corresponds to the first MF fundamental: (a) the MF digit is "1" if the second maximum corresponds to the second MF fundamental; (b) the MF digit is "2" if the second maximum corresponds to the third MF fundamental; and so forth. Further, for DTMF digits, if the first maximum corresponds to the first lowband DTMF fundamental: (a) the DTMF digit is "1" if the second maximum corresponds to the first highband DTMF fundamental; (b) the DTMF digit is "2" if the second maximum corresponds to the second highband DTMF fundamental; and so forth. If a valid MF digit or DTMF digit is found, respectively, the program transfers control to decision box 390, however, if no valid MF digit or DTMF digit is found, respectively, the program transfers control to box 300.

Decision box 390 is the point in the program at which microprocessor 50 tests to determine whether ETOT for this frame is greater than or equal to ETOT for the previous frame. If ETOT for this frame is less than ETOT for the previous frame, then the energy is decreasing and an MF digit or a DTMF digit, respectively, is not recognized as being valid. Thus, if ETOT for this frame is less than ETOT for the previous frame, the program transfers control to box 300, otherwise, control is transferred to box 400.

Box 400 is the point in the program at which microprocessor 50 determines the energy of the two MF fundamentals or DTMF fundamentals, respectively, as the sum of the maximum energy and the energy of the largest sidebin. The program then transfers control to decision box 410.

Decision box 410 is the point in the program at which microprocessor 50 compares the amount of MF energy and non-MF energy or DTMF energy and non-DTMF energy, respectively, in the present frame. The non-MF energy is determined to be equal to the difference between ETOT and the MF digit energy --the MF digit energy equals the sum of the MF fundamentals-- and the non-DTMF energy is determined to be equal to the difference between ETOT and the DTMF digit energy --the DTMF digit energy equals the sum of the DTMF fundamentals. Then the ratio of ETOT to non-MF energy or the ratio of ETOT to non-DTMF energy is determined and if the ratio greater than BROADMF or BROADDTMF, respectively, where BROADMF and BROADDTMF are predetermined amounts, the program transfers control to decision box 420. If, however, the ratio of ETOT to non-MF energy or the ratio of ETOT to non-DTMF energy is too small, respectively, we do not have a valid MF digit or DTMF digit, respectively, and the program transfers control to box 300.

Decision box 420 is the point in the program at which microprocessor 50 tests the signal-noise-ratio in this frame. The ratio of the MF digit energy and the energy of the third maximum or the ratio of the DTMF digit energy and the energy of the third maximum is compared with SNRMF or SNRDTMF, respectively, where SNRMF and SNRDTMF are predetermined constants. If the ratio of the MF digit energy to the energy of the third maximum or the ratio of DTMF digit energy to the energy of the third maximum, i.e., the signal-to-noise ratio, is greater than or equal to SNRMF or SNRDTMF, respectively, then we have passed the test and the program transfers control to decision box 430. If, however, the respective ratio falls below SNRMF or SNRDTMF, respectively, we do not have a valid MF digit or DTMF digit, respectively, and the program transfers control to box 300.

Decision box 430 is the point in the program at which microprocessor 50 examines twist, i.e., the ratio of the fundamental energy of the larger energy MF fundamental of the MF digit to the energy of the smaller energy MF fundamental or the ratio of the fundamental energy of the larger energy DTMF fundamental of the DTMF digit to the energy of the smaller energy DTMF fundamental. If the respective ratio is smaller than TWISTMF or TWISTDTMF, respectively, where TWISTMF and TWISTDTMF are predetermined constants, then the program transfers control to decision box 440. If the respective ratio is greater than or equal to TWISTMF or TWISTDTMF, respectively, we do not have a valid MF digit or DTMF digit, respectively, and the program transfers control to box 300.

Decision box 440 is the point in the program at which microprocessor 50 determines talkoff. In order to do so, the following quantities are determined. ED and ES are the difference and sum, respectively, of ETOT for the present frame and for the second previous frame, respectively. For MF digit detection, if the ratio of ES to ED is larger than EDEVMF, where EDEVMF is a predetermined constant, and endcnt is greater than or equal to 3, then a decision is made that a human voice simulated an MF digit and the program transfers control to box 300, otherwise the program transfers control to box 450. For DTMF digit detection, if the ratio of ES to ED is larger than EDEVDTMF, where EDEVDTMF is a predetermined constant, then a decision is made that a human voice simulated a DTMF digit and the program transfers control to box 300, otherwise the program transfers control to box 450.

Box 450 is the point in the program at which microprocessor 50 has determined that a suspected MF digit or DTMF digit, respectively, is present. Flags digflg and nframe are set = 1, the identity of the suspected MF digit or DTMF digit, respectively, is saved, and the program transfers control to box 300.

Box 460 is the point in the program at which microprocessor 50 decodes the maxima, in the same manner as described for box 380, to determine whether the present frame has a valid MF digit or DTMF digit, respectively. The program then transfers control to decision box 470.

Decision box 470 is the point in the program at which microprocessor 50 determines whether nframe = 1. If nframe is greater than 1, this indicates that the MF digit or DTMF digit, respectively, has already been verified and a search is being made for the end of the MF digit or DTMF digit, respectively. Thus, if nframe > 1, the program transfers control to decision box 480. If, however, nframe = 1, this indicates that we merely suspect the presence of an MF digit or a DTMF digit, respectively, and the program transfers control to decision box 510.

Decision box 480 is the point in the program at which microprocessor 50 determines whether there has been a large dropoff in total energy in this frame as compared to the previous frame. Thus, if 2*ETOT for the present frame is less than ETOT for the previous frame, then the program transfers control to box 500, otherwise, the program transfers control to box 490.

Box 490 is the point in the program at which microprocessor 50 has determined the continuing presence of the MF digit or DTMF digit, respectively. This is verified by incrementing nframe by 1 and then the program transfers control to box 300.

Box 500 is the point in the program at which microprocessor 50 has determined that the energy has fallen so low that we have decided that the MF digit or DTMF digit, respectively, ended. The flags digflg and nframe are reset to 0 [for MF digit detection, endcnt is also reset to 0], DM 10 sends a signal which indicates that the MF digit or DTMF digit, respectively, has ended to host computer 30 and the program transfers control to box 300.

Decision box 510 is the point in the program at which microprocessor 50 matches the present MF digit or DTMF digit, respectively, with the MF digit or DTMF digit, respectively, obtained from the previous frame. If the two MF digits or DTMF digits, respectively, are the same, the program transfers control to box 515, otherwise, the program transfers control to decision box 530.

Box 515 is the point in the program at which DM 10 sends a signal to host computer 30 which identifies the start of an MF digit or a DTMF digit, respectively, and which identifies the MF digit or the DTMF digit, respectively. The program then transfers control to decision box 520.

Decision box 520 is the point in the program at which microprocessor 50 determines whether there has been a large dropoff in total energy in the present frame as compared to the previous frame. Thus, if 2*ETOT for the present frame is less than ETOT for the previous frame, the program transfers control to box 500, otherwise, the program transfers control to box 490.

Decision box 530 is the point in the program at which microprocessor 50 determines whether the present frame has a valid MF digit or DTMF digit, respectively, after the previous frame had a presumably valid MF digit or DTMF digit, respectively. If no valid digit has been found, then the program transfers control to decision box 540, otherwise the program transfers control to decision box 560.

Decision box 540 is the point in the program at which microprocessor 50 has determined that there is no valid MF digit or DTMF digit, respectively, present in this frame even though a presumably valid MF digit or DTMF digit, respectively, was present in the previous frame. If the drop in energy from the previous frame is not large, then a decision is made that there was no valid MF digit or DTMF digit, respectively, in the previous frames because a valid MF digit or DTMF digit, respectively, is expected to end with a large drop in energy. For MF digits, if 1.33*ETOT for the present frame is larger than ETOT for the previous frame, the suspected digit is dropped by resetting flags digflg, endcnt, and nframe to 0 and the program recycles to look for a MF digit --all of which is done when the program transfers control to box 545. For DTMF digits, if 2*ETOT for the present frame is larger than ETOT for the previous frame, the suspected digit is dropped by resetting flags digflg and nframe to 0 and the program recycles to look for a DTMF digit --all of which is done when the program transfers control to box 545. If, however, there is a large falloff in energy from the previous frame to the present frame, the program transfers control to box 550.

Box 550 is the point in the program where there is a large falloff in energy from the previous frame to the present frame. Flags digflg and nframe are set to zero to indicate the end of a digit [for MF digits, endcnt is also set to zero], a signal which identifies the start and the identity of the MF digit or DTMF digit, respectively, is sent to host computer 30, and a signal which indicates the end of the MF digit or DTMF digit, respectively, is sent to host computer 30. Finally, the program transfers control to box 300.

Decision box 560 is the point in the program at which microprocessor 50 has determined the presence of a different MF digit or DTMF digit, respectively, than the MF digit or DTMF digit, respectively, which was detected in the previous frame. If the total energy of the present frame is less than the total energy of the previous frame, signifying a drop in energy, we end the previous digit and ignore the present digit. This is done by transferring control to box 550. If, however, the total energy of the present frame is greater than the total energy of the previous frame, we ignore the results of the analysis of the previous frame and the program transfers control to box 400.

As should be clear to those of ordinary skill in the art, the embodiment of the present invention which was described in detail above is an MF and DTMF detector which analyzes an input signal and, in response thereto, generates an identifier signal for use by another apparatus such as host computer 30. For example, the another apparatus can be an interactive system which can transmit voice signals to a human in the form of information and queries and can receive responses from the human in the form of various combinations of DTMF digits which are conveniently available from a Touch Tone telephone. In such a system, embodiments of the present invention advantageously provide detection and identification of the DTMF digits which are transmitted to the iterative system.

As should be clear to those of ordinary skill in the art, further embodiments of the present invention may be made without departing from its teachings. For example, in accordance with the present invention, the energy in the frequency bins in the frequency spectrum of a frame of the signal, $e(n)$, may be determined in many different ways. In particular, in another embodiment of the present invention, $e(n)$ equals the sum of the absolute value of the real part of the component of frequency bin $n$ and the absolute value of the imaginary part of the component of frequency bin $n$.

As should be clear to those of ordinary skill in the art, $c_{11}$; $c_{12}$; $c_{21}$; $c_{22}$; $c_{31}$; $c_{32}$; $c_{41}$; $c_{42}$; $c_{51}$; $c_{52}$; $c_{61}$; $c_{62}$; $c_{71}$; $c_{72}$; $c_{81}$; $c_{82}$; ERGDTMF; BROADDTMF; SNRDTMF; TWISTDTMF; EDEVDTMF; $d_{11}$; $d_{12}$; $d_{21}$; $d_{22}$; $d_{31}$; $d_{32}$; $d_{41}$; $d_{42}$; $d_{51}$; $d_{52}$; $d_{61}$; $d_{62}$; ERGMF; BROADMF; SNRMF; TWISTMF; and EDEVMF are predetermined constants which are stored in memory 60. In other embodiments of the present invention, these constants may be downloaded into memory 60 from, for example, host computer 30 to make the detector easily customized for a particular application. For example, in a preferred embodiment of the present invention, $c_{11} = 8$; $c_{12} = 1$; $c_{21} = 2$; $c_{22} = 16$; $c_{31} = 8$; $c_{32} = 2$; $c_{41} = 2$; $c_{42} = 1$; $c_{51} = 4$; $c_{52} = 4$; $c_{61} = 4$; $c_{62} = 2$; $c_{71} = 2$; $c_{72} = 4$; $c_{81} = 1$; $c_{82} = 8$; ERGDTMF = 250; BROADDTMF = 4; SNRDTMF = 89; TWISTDTMF = 10; EDEVDTMF = 3; $d_{11} = 1$; $d_{12} = 6$; $d_{21} = 4$; $d_{22} = 1$; $d_{31} = 2$; $d_{32} = 6$; $d_{41} = 1$; $d_{42} = 2$; $d_{51} = 6$; $d_{52} = 6$; $d_{61} = 2$; $d_{62} = 1$; ERGMF = 40; BROADMF = 2; SNRMF = 12; TWISTMF = 10; and EDEVMF = 3.

In addition, we have been able to reduce the time it takes to obtain the FFT for two channels by utilizing channel 1 as the real array input and channel 2 as the imaginary array input to the 256 point, complex FFT performed on this data by DSP 65. As a result, in such an embodiment, we are able to determine the fourier spectrum of 2 channels simultaneously. The respective fourier spectrum coefficients for each channel are determined from the output of DSP 65 in accordance with the following:

$$Rch.1(n) = [R(n) + R(256-n)]$$
$$Ich.1(n) = [I(n) - I(256-n)]$$
$$Rch.2(n) = [I(n) + I(256-n)]$$
$$Ich.2(n) = - [R(n) - R(256-n)]$$

where:

| | |
|---|---|
| $R(n)$ | is the real fourier spectrum result coefficient for the nth frequency bin |
| $I(n)$ | is the imaginary fourier spectrum result coefficient for the nth frequency bin |
| $Rch.1(n)$ | is real fourier spectrum coefficient for the nth frequency bin for channel 1 |
| $Ich.1(n)$ | is the imaginary fourier spectrum coefficient for the nth frequency bin for channel 1 |

.

.

## Claims

1. A method for detecting and identifying predetermined digits in an analog or digital signal, a digit being comprised of two predetermined, substantially single frequency tones, which method comprises the steps of:

(a) obtaining digital measures of the amplitude of the signal, if the signal is a digital signal, or digital measures of a sample of the amplitude of the signal, if the signal is an analog signal;

(b) determining a measure of energy of frequency bins for a predetermined portion of the frequency spectrum of a frame comprised of a predetermined number of the digital measures;

(c) determining the energy ETOT for the predetermined portion by summing the measure of energy of the frequency bins;

(d) determining the energy of a predetermined number of maxima of the measure of energy of the frequency bins;

(e) comparing at least one of ETOT, the predetermined number of energy maxima, and predetermined sums of energy measures with predetermined thresholds;

(f) determining whether a comparison between at least one of ETOT, the predetermined number of energy maxima, and predetermined sums of energy measures for the present frame and for predetermined ones of previous frames satisfies predetermined criteria; and

(g) identifying the digit.

2. The method of claim 1 wherein the predetermined ones of previous frames of step (f) comprises the second previous frame.

3. The method of claim 1 wherein successive frames of step (b) are comprised of a predetermined number of the same digital measures.

4. The method of claim 1 wherein step (b) comprises obtaining real and imaginary parts of the contents of the frequency bins by fourier transform.

5. The method of claim 4 wherein step (b) further comprises summing the absolute value of the real part and the absolute value of the imaginary part of the contents of a frequency bin.

6. The method of claim 4 wherein step (b) further comprises summing the square of the real part and the square of the imaginary part of the contents of a frequency bin.

7. The method of claim 1 wherein step (a) further comprises a step of converting the digital measures into a linear PCM digital format, if the signal is an analog signal, or converting the digital measures into a linear PCM digital format, if the signal is a digital signal and is not already so encoded;

8. The method of claim 1 wherein step (e) comprises:

test1 step of determining whether ETOT falls below a test1 predetermined threshold and, if so, returning to step (a);

test2 step of determining whether any of the predetermined number of energy maxima are within a predetermined degree of closeness to one of the predetermined single frequency tones and determining whether the energy of the two largest energy maxima correspond to one of a predetermined number of possible digits and, if not, returning to step (a);

test3 step of determining whether ETOT for the present frame is less than ETOT for the previous frame and, if so, returning to step (a);

test4 step of determining whether the ratio of ETOT to non-digit energy is less than a test4 predetermined threshold and, if so, returning to step (a);

test5 step of determining whether the ratio of the digit energy and background energy is less than a test5 predetermined threshold and, if so, returning to step (a); and

test6 step of determining whether the ratio of energy of the larger energy single frequency tone of the digit to energy of the smaller energy single frequency tone of the digit is less than a test6 predetermined threshold and, if not, returning to step (a).

9. The method of claim 8 wherein the test4 step comprises determining the non-digit energy to be equal to ETOT minus the sum of the energy of the two largest energy maxima.

10. The method of claim 8 wherein the test5 step comprises determining the background energy to be equal to the energy of the third largest energy maximum.

11. The method of claim 1 wherein step (f) comprises determining a difference, ED, and a sum, ES, respectively, of ETOT for the present frame and for the second previous frame, respectively, and determining whether the ratio of ES and ED is greater than an historical predetermined amount and, if so, returning to step (a).

12. The method of claim 1 which further comprises step (h) of detecting the end of the digit.

13. The method of claim 12 wherein step (h) comprises determining when ETOT falls below an ending predetermined threshold with respect to predetermined preceding frames.

14. The method of claim 8 wherein step (g) comprises identifying the digit after a first frame has passed through step (f) and the next frame has passed through predetermined steps of test1 step to test6 step.

15. The method of claim 14 wherein the predetermined steps comprise test1 step and test2 step.

16. An apparatus for detecting and identifying predetermined digits in an analog or digital signal, a digit being comprised of two predetermined, substantially single frequency tones, which apparatus comprises:

obtaining means for obtaining digital measures of the amplitude of the signal, if the signal is a digital signal, or digital measures of a sample of the amplitude of the signal, if the signal is an analog signal and for sending a signal to energy means;

the energy means, responsive to the signal from the obtaining means, for determining a measure of energy of frequency bins for a predetermined portion of the frequency spectrum of a frame comprised of a predetermined number of the digital measures; for determining the energy ETOT for the predetermined portion by summing the measure of energy of the frequency bins; for determining the energy of a predetermined number of maxima of the measure of energy of the frequency bins, and for sending a signal to first comparing means;

the first comparing means, responsive to the signal from the energy means, for comparing at least one of ETOT, the predetermined number of energy maxima, and predetermined sums of energy measures with predetermined thresholds and, if the tests are passed, for sending a signal to a second comparing means, otherwise, sending a signal to the obtaining means;

the second comparing means, responsive to the signal from the first comparing means, for determining whether a comparison between at least one of ETOT, the predetermined number of energy maxima, and predetermined sums of energy measures for the present frame and for predetermined ones of previous frames satisfies predetermined criteria and, if so, setting an indicator and sending a signal to the obtaining means, otherwise, sending a signal to the obtaining means.

17. The apparatus of claim 16 wherein the first comparing means comprises:

test1 means, responsive to the signal from the energy means, for determining whether ETOT falls below a test1 predetermined threshold and, if so, sending a signal to the obtaining means, otherwise, sending a signal to test2 means;

the test2 means, responsive to the signal from the test1 means, for determining whether any of the predetermined number of energy maxima are within a predetermined degree of closeness to one of the possible fundamental frequencies and for determining whether the energy of the two largest energy maxima correspond to one of a predetermined number of possible digits and, if not, sending a signal to the obtaining means, otherwise, sending a signal to test3 means;

test3 means, responsive to the signal from the test2 means, for determining whether ETOT for the present frame is less than ETOT for the previous frame and, if so, sending a signal to the obtaining means, otherwise, sending a signal to test4 means;

the test4 means, responsive to the signal from the test3 means, for determining whether the ratio of ETOT to non-digit energy is less than a test4 predetermined threshold and, if so, sending a signal to the obtaining means, otherwise, sending a signal to test5 means;

test5 means, responsive to the signal from the test4 means, for determining whether the ratio of digit energy and background energy is less than a test5 predetermined threshold and, if so, sending a signal to the obtaining means, otherwise, sending a signal to test6 means;

the test6 means, responsive to the signal from the test5 means, for determining whether the ratio of energy of the larger energy single frequency tone of the digit to energy of the smaller energy single frequency tone of the digit is less than a test6 predetermined threshold and, if not, sending a signal to the obtaining means, otherwise, sending a signal to the second comparison means.

18. The apparatus of claim 17 wherein:

the test2 means further comprises means for generating a signal identifying the digit instead of sending a signal to test3 means whenever the indicator for the previous frame is set.

FIG. 1

FIG. 2

obtain digital values
perform FFT to obtain
frequency spectrum
determine e(n) for frequency
spectrum and ETOT
obtain energy and frequency bin
index of three largest energy
peaks in frequency spectrum
and energy and frequency bin
index of largest sidebins for
these peaks
endcnt = endcnt + 1 [MF digit only]

300

310

$ETOT \geq ERG$ ?

yes

no

to 360

320

dig flg = 0

330

nframe = 1; >1; 0 ?

nframe >1

nframe = 0

to 350

nframe = 1

340

endcnt = 0 [MF digit only]
nframe = 0
send a signal which
identifies start and
identity of digit
to host computer 30
send signal which
identifies end and
identity of digit to
host computer 30.

from
330

nframe = 0
send a signal which
identifies the end and
identity of the digit
to host computer 30.
endcnt = 0 [Valid digit only]

to 300

~350

from
310

Determine whether energy
peaks correspond to one of
the digit fundamentals

~360

~370

digflg = 0
?

no

to
460

yes

~380

Determine whether the
pair of the two
largest energy peaks
correspond to a digit

to 300

not
valid
digit

valid digit

~390

ETOT (present frame) <

ETOT (previous frame)

yes

not valid
digit

no

~400

energy of two fundamentals
are set equal to maximum
energy plus energy of
largest sidebin

FIG. 2₂

~410

$$\frac{ETOT}{non\text{-}digit\ energy} < BROAD\ ?$$

yes → to 300

no

~420

$$\frac{digit\ energy}{energy\ of\ 3^{rd}\ peak} < SNR\ ?$$

yes

~430

$$\frac{fund.\ energy\ of\ larger\ energy\ fundamental}{fund.\ energy\ of\ smaller\ energy\ fundamental} < TWIST\ ?$$

no

yes

$$\frac{ETOT(present\ frame) + ETOT(2^{nd}\ previous\ frame)}{ETOT(present\ frame) - ETOT(2^{nd}\ previous\ frame)} > EDEV$$

and

$$cnt.cnt. \geq 3\ [MF\ digit\ only]$$

yes

no    ~450

digflg = 1
nframe = 1

FIG.2₃

460

Decode peaks as described
for box 380 to determine
whether this frame has
a valid digit

470

nframe = 1

nframe ≥ 1 ?

to 510

>1

480

2 * ETOT (present frame)
< ETOT (previous frame)

yes

no

490

nframe = nframe + 1

to 300

500

dig flg = 0
nframe = 0
endent = 0  [MF digit only]
send a signal which
identifies the end and identity
of digit to host computer 30

FIG. 2₄

FIG. 25

nframe = 0
dig flg = 0
end cnt = 0 [MF digit only]

Send a signal which identifies
start and identity of DTMF
digit to host computer 30.
send a signal which identifies
end and identity of DTMF
digit to host computer 30.

550

to 300

from 530

ETOT (present frame)
<
ETOT (previous frame)
?

560

yes

no

to 400

FIG. 2₆